# EUROPÄISCHE PATENTSCHRIFT

(11) **EP 1 038 713 B1**
(45) Veröffentlichungstag und Bekanntmachung des Hinweises auf die Patenterteilung: **11.09.2002**
(21) Anmeldenummer: 00101306.9
(22) Anmeldetag: 22.01.2000
(51) Int. Cl.: B60K 6/00, B60K 6/04

(54) **Fahrzeug mit einem Antriebsstrang für wenigstens zwei Antriebsräder und mit einem Brennkraftmaschinen-Antrieb sowie mit einem Brennstoffzellensystem**
Vehicle with a drive train for at least two driving wheels and with an internal combustion engine drive as well as with a fuel cell system
Véhicule avec une transmission pour au moins deux roues motrices et avec un moteur à combustion interne ainsi qu'un système de piles à combustible

(30) Priorität: 26.03.1999 DE 19913794
(43) Veröffentlichungstag der Anmeldung: 27.09.2000
(73) Patentinhaber: Ballard Power Systems AG, 73230 Kirchheim / Teck-Nabern (DE)
(72) Erfinder: zur Megede, Detlef, 73230 Kirchheim/Teck (DE)
(74) Vertreter: Kocher, Klaus-Peter, Dipl.-Phys.

(56) Entgegenhaltungen:
- WO-A-98/40922
- DE-C- 4 412 451
- GB-A- 1 447 835

## Beschreibung

Die Erfindung bezieht sich auf ein Fahrzeug mit einem Antriebsstrang für wenigsten zwei Antriebsräder und mit einem Brennkraftmaschinen-Antrieb sowie mit einem Brennstoffzellensystem.

Es ist bereits ein aus einem Brennkraftmaschinen-Antrieb und einem Brennstoffzellensystem-Antrieb bestehender Hybrid-Antrieb für ein Fahrzeug bekannt (GB 1447 835). Der Brennstoffzellensystem-Antrieb enthält einen Elektromotor, dessen Welle an einem Ende mit der Antriebswelle der Brennkraftmaschine und am anderen Ende mit einer Kupplung verbunden ist. An die Kupplung schließen sich ein Antriebsstrang mit Getriebe, Kardanwelle, Ausgleichsgetriebe, Radwellen und Antriebsrädern an. Die Brennkraftmaschine und die Brennstoffzelle werden von einer gemeinsamen Kraftstoffquelle je über eine Speiseleitung mit Wasserstoff versorgt. In jeder Speiseleitung befindet sich ein Steuerventil, das an eine elektrische Steuerung angeschlossen ist, die mechanisch mit einem Fußpedal verbunden ist, von dessen Stellung die Betätigung der beiden Steuerventile in den Speiseleitungen abhängt. Bei Pedalstellungen, die kleineren Antriebsleistungen für das Fahrzeug zugeordnet sind, öffnet die Steuerung das Steuerventil im Zuge des Speiseleitung für die Brennkraftmaschine. Bei Pedalstellung, die höheren Antriebsleistungen für das Fahrzeug zugeordnet sind, öffnet die Steuerung beide Steuerventile in den Speiseleitungen für die Brennkraftmaschine und die Brennstoffzelle, d. h. beide Antriebe arbeiten gleichzeitig.

Wenn die Brennstoffzelle betriebsbereit sein soll, um ihre Leistung ohne Unterbrechung zur Verfügung stellen zu können, ist eine zusätzliche Steuereinheit vorhanden, die die Brennkraftmaschine bei niedriger Leistungsabgabe für das Fahrzeug im Leerlauf arbeiten läßt, während die Brennstoffzelle Leistung abgibt. Bei größerem Leistungsbedarf arbeiten beide Antriebe zusammen. Im Leerlauf wird der Brennkraftmaschine so viel Kraftstoff zugeführt, daß sie für den Elektromotor, der die Antriebsleistung erzeugt, nicht als Bremse wirkt.

Bekannt ist auch ein Fahrzeug, das einen Elektromotor, eine Brennstoffzelle, einen Kompressor zur Zufuhr von Luft zur Brennstoffzelle, eine Elektromotor zum Antrieb des Kompressors, einen Reformer, einen Brennstofftank für flüssigen Kraftstoff, einen Wasserspeicher und einen Verdampfer aufweist. Der flüssige Kraftstoff und Wasser werden im Verdampfer in den gasförmigen Zustand überführt und danach zum Reformer geleitet, in dem unter Zufuhr von Wärme mit Hilfe eines katalytischen Brenners Wasserstoff, Kohlendioxid und Kohlenmonoxid gebildet werden. Das so gebildete wasserstoffhaltige Gas wir der Brennstoffzelle zugleich mit Luft unter Druck zugeführt (DE 44 12 451 01).

Brennstoffzellensysteme, die zur Erzeugung von Wasserstoff aus einem flüssigen Kraftstoff ein Gaserzeugungssystem besitzen, haben gegenüber Brennstoffzellensystemen, die aus Tanks mit gasförmigen Wasserstoff gespeist werden, eine Reihe von Nachteilen, deren Beseitigung zu deutlichen Mehraufwand führt und auch nicht vollständig gelingt.

In diesem Zusammenhang ist vor allem das Kaltstartverhalten ein Problem. Da das Gaserzeugungssystem erst nach Erreichen einer bestimmten höheren, von der Art des Kraftstoffs abhängigen Betriebstemperatur funktionsfähig ist, d. h. ein wasserstoffhaltiges Gas erzeugt, muß es nach der Fahrzeuginbetriebnahme erst aufgeheizt werden. Hierdurch ergibt sich eine Wartezeit zwischen Fahrzeugstart und Fahrbereitschaft. Durch die Erzeugung thermischer Energie für das Aufheizen des Gaserzeugungssystems wird Kraftstoff im Stillstand verbraucht.

Bekannt ist auch ein hybrides System mit einer Brennkraftmaschine und einer Brennstoffzelle. Das System enthält wenigstens einen thermisch oder katalytisch arbeitenden Cracking-Reaktor, dem flüssiger Kraftstoff zugeführt wird und der einen Gasstrom erzeugt, in dem Wasserstoff enthalten ist, und einen weiteren Strom, in dem sowohl Gas wie auch Flüssigkeiten enthalten sein können. Der Wasserstoff wird einer Brennstoffzelle zur Erzeugung elektrischer Energie zugeführt, mit der ein Elektromotor betrieben wird. Der weitere Strom wird einer Brennkraftmaschine zugeführt, die eine mechanische Leistung abgibt (WO 98 40 922 A1, nächsliegenden stand der Technik).

Um die vorstehend erwähnten Nachteile zu vermieden, könnten eine zusätzliche Speichereinheit oder ein Verfahren zur Wasserstofferzeugung ohne hohe Temperaturen, d. h. bei Umgebungstemperatur eingesetzt werden. Die Speichereinheit besteht z. B. aus einer elektrischen Batterie, einem Superkondensator oder einem zusätzlich vorzusehenden Wasserstofftank. Ein geeignetes Wasserstofferzeugungsverfahren, das bei Umgebungstemperatur arbeitet, ist nicht bekannt. Die Speichereinheit muß vor der Inbetriebnahme des Fahrzeugs eine ausreichende Ladung bzw. Füllung aufweisen, was unter Umständen nach längeren Stillstandzeiten nicht mehr der Fall ist. Bei einem auch unter niedrigen Temperaturen arbeitenden Wasserstofferzeugungsverfahren erhöht sich der Aufwand.

Der Erfindung liegt das Problem zugrund, ein Fahrzeug, das ein mit flüssigem Kraftstoff gespeistes Brennstoffzellen-System aufweist, dahingehend weiterzuentwickeln, daß ein Anlassen mit sofortigem Fahrtbeginn ohne Energieentnahme aus einem zusätzlichen Gasspeicher für die Brennstoffzelle möglich ist, und ein Verfahren zum Betrieb eines solchen Fahrzeugs auszugeben.

Das Problem wird erfindungsgemäß durch ein Fahrzeug mit wenigstens einem Antriebsstrang für Antriebsräder und mit einem an den Antriebsstrang ankuppelbaren Brennkraftmaschinen-Antrieb sowie mit einem Brennstoffzellensystem gelöst, das eine Brennstoffzelle und eine Gaserzeugungseinrichtung aufweist, die bei höherem Temperaturen aus einem Kraftstoff wasserstoffhaltiges Gas für die Brennstoffzelle erzeugt, wobei Einrichtungen zur Überleitung von Wärme aus dem Brennkraftmaschinen-Antrieb in die Gaserzeugungseinrichtung und in die Brennstoffzelle und eine Steuerung vorgesehen sind, von der automatisch Aggregate für die Zufuhr von Kraftstoff und Luft zum Brennstoffzellensystem nach dem Aufheizen der Gaserzeugungseinrichtung und der Brennstoffzelle auf Arbeitstemperaturen einschaltbar sind. Unter Antriebsstrang sind die Bauteile hinter einer Kupplung des Fahrzeugs bis zu den Antriebsrädern zu verstehen. Unter Brennkraftmaschinen-Antrieb ist hierbei ein Antrieb mit einer herkömmlichen Brennkraftmaschine und den für ihren Betrieb notwendigen Aggregaten wie Anlasser, Lichtmaschine, Akkumulator, Kraftstoffdosiereinrichtung, Zündeinrichtung usw. zu verstehen. Der Brennkraftmaschinen-Antrieb wird auf übliche Weise in Gang gesetzt, indem mittels des Zündschlüssels die Bauelemente für das Starten betätigt werden.

Die beim Betrieb der Brennkraftmaschine auftretenden heißen Abgase heizen die Gaserzeugungseinrichtung und die Brennstoffzelle auf Betriebstemperaturen bzw. eine für die Funktion ausreichende Temperatur auf. Sobald die Arbeits- bzw. Betriebstemperatur erreicht ist, wird die Zufuhr von Luft und flüssigem Kraftstoff zur Gaserzeugungseinrichtung eingeleitet und die Brennstoffzelle mit der Luft und dem von der Gaserzeugungseinrichtung ausgegebenen wasserstoffhaltigen Gas in Gang gesetzt.

Insbesondere ist wenigstens ein an den Antriebsstrang ankuppelbarer Elektrofahrmotor vorgesehen. Wenn die Brennstoffzelle Strom erzeugt, wird der z. B. über einen Steller gesteuerte Elektrofahrmotor durch Betätigen seiner Kupplung an den Antriebsstrang angeschlossen. Je nach der erforderlichen Fahrleistung kann die Brennkraftmaschine mit dem Elektrofahrmotor zusammenarbeiten oder von Antriebsstrang abgekuppelt werden.

Vorzugsweise ist für die Energieversorgung des Brennkraftmaschinen-Antriebs und des Brennstoffzellensystems flüssiger Kraftstoff vorgesehen. Die erfindungsgemäße Einrichtung ermöglicht die sofortige Fahrbereitschaft eines Fahrzeugs, bei dem flüssiger Kraftstoff für einen Brennstoffzellensystem-Antrieb verwendet wird. Wartezeiten bei Inbetriebnahme mit abgekühltem Gaserzeugungssystem lassen sich vermeiden. Weitere Vorteile der erfindungsgemäßen Vorrichtung sind: Kein zusätzlicher Kraftstoffbedarf zum Heizen des Brennstoffzellensystems vor Fahrtaufnahme, erhöhte Betriebssicherheit aufgrund der Möglichkeit, bei einer Störung des Brennstoffzellensystems die Fahrt mit der Brennkraftmaschine fortsetzen zu können, und eine flexible Nutzung von Brennkraftmaschine und Brennstoffzellensystem-Antrieb je nach Bedarf für zusätzliche oder alternative Antriebsleistung, Zusatzstromversorgung usw.

Es ist günstig, wenn nach der Funktionsaufnahme der Brennstoffzelle der Elektrofahrmotor an den Antriebsstrang automatisch ankuppelbar oder die manuell oder durch Fußpedal durchzuführende Kupplung des Elektrofahrmotors mit dem Antriebsstrang freigebbar ist. Sobald die Brennkraftmaschine in Betrieb ist, kann die Kupplungsverbindung zwischen der Brennkraftmaschine und dem Antriebsstrang mit den Antriebsrädern hergestellt werden, worauf sich das Fahrzeug in Bewegung setzt.

Bei einer zweckmäßigen Ausführungsform ist die Nennleistung des Brennkraftmaschinen-Antriebs kleiner als die des Elektrofahrmotors. Die Brennkraftmaschine wird insbesondere zum Anfahren des Fahrzeugs bei kaltem Gaserzeugungssystem und zum Aufheizen des Gaserzeugungssytems auf Betriebstemperatur benötigt. Die hierfür benötigte Leistung ist gering im Vergleich zu der für die verschiedenen Geschwindigkeiten, Ladezustände und Steigungen im üblichen Fahrbetrieb benötigten Leistung.

Insbesondere sind der Brennkraftmaschinen-Antrieb und das Brennstoffzellensystem in einem Kühlkreislauf gemeinsam an einen Kühler angeschlossen. Durch einen gemeinsamen Kühler vermindert sich der Aufwand für die Antriebssysteme. Außerdem wird die Brennstoffzelle vor ihrer Inbetriebnahme durch die Brennkraftmaschine bereits auf Arbeits- bzw. Betriebstemperatur aufgeheizt. Dies bedeutet auch eine Gewichtseinsparung am Fahrzeug. Ein weiterer Vorteil besteht darin, daß die Brennkraftmaschine auch dann über ihren Kühlkreislauf eine höhere Temperatur hat, wenn sie nicht in Betrieb ist, so daß eine bedarfsweise Inbetriebnahme zur Unterstützung des Elektrofahrmotors bei höherer Betriebstemperatur erfolgt. Damit wird die bei kalter Brennkraftmaschine nach dem Ingangsetzen höhere Schadstofferzeugung vermieden.

Bei einer weiteren zweckmäßigen Ausführungsform ist vorgesehen, daß eine Einrichtung zur Überleitung von Wärme aus den Abgasen der Brennkraftmaschine in die Gaserzeugungseinrichtung vorgesehen ist. Es ist insbesondere ein außerhalb des Gaserzeugungseinrichtung verlaufender Bypass angeordnet, der im Betrieb der Brennkraftmaschine und im Betrieb des Brennstoffzellensystems für die Abgase durchlässig und vor Inbetriebsetzung des Brennstoffzellensystems undurchlässig ist. Wenn das Brennstoffzellensystem arbeitet, d. h. Strom erzeugt, entsteht Wärme, die für den Betrieb des Gaserzeugungssystems ausreicht. Um eine Überhitzung bei gleichzeitiger Leistungsabgabe der Brennstoffzelle und der Brennkraftmaschine zu vermeiden, werden dann die Abgase der Brennkraftmaschine am Gaserzeugungssystem vorbeigeleitet.

Es ist günstig, wenn eine Einrichtung zur Überleitung von Wärme aus den Abgasen der Brennkraftmaschine aus wenigstens einer im Inneren der Gaserzeugungseinrichtung verlaufenden Leitung besteht, die Abgase führt. Diese Ausführungsform zeichnet sich durch ihren einfachen Aufbau aus.

Bei einer anderen vorteilhaften Ausführungsform sind die Brennkraftmaschine, die Gaserzeugungseinrichtung und die Brennstoffzelle gemeinsam an einen Abgasreiniger angeschlossen. Durch diese Ausführungsform ist es möglich, das Antriebssystem mit geringerem Gewicht auszubilden.

Für das Verfahren wird das Problem zum Betrieb eines Fahrzeugs mit wenigstens einem Antriebsstrang für Antriebsräder und mit einem an den Antriebsstrang ankuppelbaren Brennkraftmaschinen-Antrieb sowie mit einem Brennstoffzellsystem, das eine Brennstoffzelle und eine Gaserzeugungseinrichtung aufweist, die bei höheren Temperaturen wasserstoffhaltiges Gas für die Brennstoffzelle erzeugt, erfindungsgemäß gelöst, indem der Brennkraftmaschinen-Antrieb mit flüssigem Kraftstoff betrieben und nach dem Starten der Brennkraftmaschine an den Antriebsstrang ankuppelbar ist, während die heißen Gase die von der Brennkraftmaschine erzeugt werden, das Brennstoffzellensystem direkt und/oder indirekt auf eine wenigstens für die Funktion ausreichende Temperatur aufheizen, bei deren Erreichen der Brennsroffzellensystem-Antrieb durch Zufuhr von Kraftstoff und Luft in Gang gesetzt wird. Ein Elektrofahrmotor wird insbesondere automatisch oder durch Fuß- oder Handbetätigung an den Antriebsstrang angekoppelt und die Brennkraftmaschine wahlweise von Antriebsstrang abgekoppelt.

Zweckmäßigerweise werden die Brennstoffzelle und die Brennkraftmaschine gemeinsam auf eine Betriebstemperatur gekühlt.

Mit dieser Maßnahme wird die Brennkraftmaschine auch dann, wenn sie nicht in Betrieb ist, auf Betriebstemperatur gehalten, so daß beim Zuschalten der Brennkraftmaschine zur Leistungerhöhung des Fahrzeugsantriebs nicht wie beim Kaltstart einer Brennkraftmaschine eine höherer Schadstoffausstoß entsteht.

Die Erfindung wird im folgenden an Hand eines in einer Zeichnung dargestellten Ausführungsbeispiels näher beschrieben, aus dem sich weitere Einzelheiten, Merkmale und Vorteile ergeben.

Es zeigen:
- Fig. 1: eine Prizipdarstellung eines Fahrzeugs mit einem Brennkraftmaschinen-Antrieb und einem Brennstoffzellensystems-Antrieb in einem ersten Betriebszustand,
- Fig. 2: das in Fig. 1 dargestellte Fahrzeug in einem zweiten Betriebszustand,
- Fig. 3: das in Fig. 1 dargestellte Fahrzeug in einem dritten Betriebszustand.

Ein insgesamt mit 1 bezeichnetes Fahrzeug weist einen Brennkraftmaschinen-Antrieb mit einer Brennkraftmaschine 2 auf, der alle für seine Funktion notwendigen Hilfsaggregate, z. B. Anlasser, Lichtmaschine, Akkumulator, Kraftstoffdosiereinrichuntg, Zündeinrichtung, Spannungsregler usw., enthält. Diese bekannten Hilfsaggregate sind in der Zeichnung nicht dargestellt. Das Brennkraftmaschinen-Antriebssystem wird in folgenden auch Brennkraftmaschine 2 genannt. Weiterhin enthält das Fahrzeug 1 einen Brennstoffzellensystem-Antrieb mit an sich bekanntem Aufbau. Von diesen für Kraftfahrzeuge bekannten Brennstoffzellensystem-Antrieb sind in der Zeichnung die Gaserzeugungseinrichtung 3, die Brennstoffzelle 4, und der Elektrofahrmotor 5 und eine Abgasreinigungseinheit 6 dargestellt. Von der Gaserzeugungseinrichtung 3 verläuft eine Verbindungsleitung 7 für wasserstoffhaltiges Gas zur Brennstoffzelle 4. Über eine Leitung 8 wird der Brennstoffzelle 4 Reaktionsluft zugeführt. Von der Brennstoffzelle 4 verläuft eine Leitung 9 für die Abführung der Restluft bzw. von Abgasen zur Abgasreinigungseinheit 6. Ein Abgasleitung 10 verbindet die Gaserzeugungseinrichtung 3 mit der Abgasreinigungseinheit 6, an die der Fahrzeugauspuff 18 angeschlossen ist.

Der Elektrofahrmotor 5 ist über eine Kupplung 11 und ein Differential 12 mit der Kardanwelle 13 verbunden, die über ein weiteres Differential 14 die Achse 15 mit den Rädern 16 antreibt. Die Brennkraftmaschine 2 ist über eine Kupplung 17 mit dem Differential 12 verbunden.

Die Brennkraftmaschine 2 und die Brennstoffzelle 4 besitzen einen gemeinsamen Kühlkreislauf mit einem Kühler 19. Die Brennstoffzelle 4 ist insbesondere eine H₂/O₂₋Brennstoffzelle mit protonenleitender Membran, eine sog. PEM-Zelle, und setzt sich aus einem Stack einzelner Brennstoffzellen zusammen. Neben dem Kühler 19 sind in der Zeichnung die Leitungen 20 zwischen Brennkraftmaschine 2 und Kühler 19, zwischen Brennkraftmaschine 2 und Brennstoffzelle 4 und zwischen Brennstoffzelle 4 und Kühler 19 dargestellt.

Von der Brennkraftmaschine 2 verläuft eine Abgasleitung 21 zur Gaserzeugungseinrichtung 3, in der die Abgasleitung z. B. in Form einer Heizschlange 22 hindurchgeführt ist. Von der Heizschlange 22 verläuft eine Abgasleitung 23 zwischen der Gaserzeugungseinrichtung 3 und der Abgasreinigungseinheit 6. Von der Abgasleitung 21 zweigt eine Bypass-Leitung 24 ab, mit der die Gaserzeugungseinrichtung 3 umgangen wird. In der Bypass-Leitung 24 ist ein Absperrelement 25, z. B. eine Klappe, ein Ventil oder ein Schieber, angeordnet.

Das Fahrzeug 1 besitzt einen Kraftstofftank 26, in dem sich beispielsweise flüssiges Methanol befindet. Der Kraftstoff im Tank 26 wird sowohl für die Versorgung der Brennkraftmaschine 2 als auch für die Versorgung der Brennstoffzelle 4 verwendet. Die Kraftstoffleitung zur Brennkraftmaschine 2 ist in der Zeichnung nicht dargestellt. An der Brennkraftmaschine 2 sind schematisch ein Eingang 27 für Luft und ein Eingang 28 für den Kraftstoff dargestellt, die z. B. in einem zu der Brennkraftmaschine 2 gehörigen, nicht näher bezeichneten Gemischbildner angeordnet sind.

Der Gaserzeugungseinrichtung 3 wird der Kraftstoff über eine nicht näher dargestellte Leitung an einen schematisch dargestellten Eingang 29 zugeführt. Luft wird der Gaserzeugungseinrichtung 3 über einen schematisch dargestellten Eingang 30 zugeführt. In der Gaserzeugungseinrichtung 3 wird der von der Brennstoffzelle 4 benötigte Wasserstoff aus dem Kraftstoff abgetrennt. Beispielsweise weist die Gaserzeugungsreinrichtung 3 in an sich bekannter Weise einen Verdampfer auf, in dem der Kraftstoff und Wasser aus einen nicht dargestellten Wasserspeicher in einen gasförmigen Zustand überführt und anschließend zu einem Reformer geleitet werden, in dem mittels eines katalytischen Brenners ein wasserstoffhaltiges Gas gebildet wird, aus dem Restgas abgeschieden wird, das über die Abgasleitung 10 abgeführt wird. Das wasserstoffhaltige Gas und Luft werden unter Druck der Brennstoffzelle 4 zugeführt, in der die für den Betrieb des Elektrofahrmotors 5 benötigte elektrische Energie erzeugt wird.

Eine Steuerung 31, die unter anderem einen Steller für den Elektrofahrmotor 5 enthält, ist über nicht näher bezeichneten Leitungen mit dem Elektrofahrmotor 5, den elektrisch Aggregaten der Brennkraftmaschine 2, wenigstens einem Temperaturfühler in der Gaserzeugungseinrichtung 3, der Brennstoffzelle 4, dem Absperrelement 25, der Kupplung 17 und der Kupplung 11 verbunden.

Der Verbrennungsmotor 2 hat z. B. eine Antriebsleistung von 30 kW, während der Elektrofahrmotor 5 eine Antriebsleistung von 70 kW besitzt. Es sind jedoch auch andere Leistungverhältnisse möglich. Die für die Heizung der Gaserzeugungseinrichtung 3 aus dem kalten Zustand auf Betriebstemperatur benötigte Wärme kann aus den Abgasen der Brennkraftmaschine 2 auch mittels eines Wärmetauschers gewonnen werden, der ein anderes Wärmeträgermedium als die Abgase in der Gaserzeugungseinrichtung 3 zirkulieren läßt.

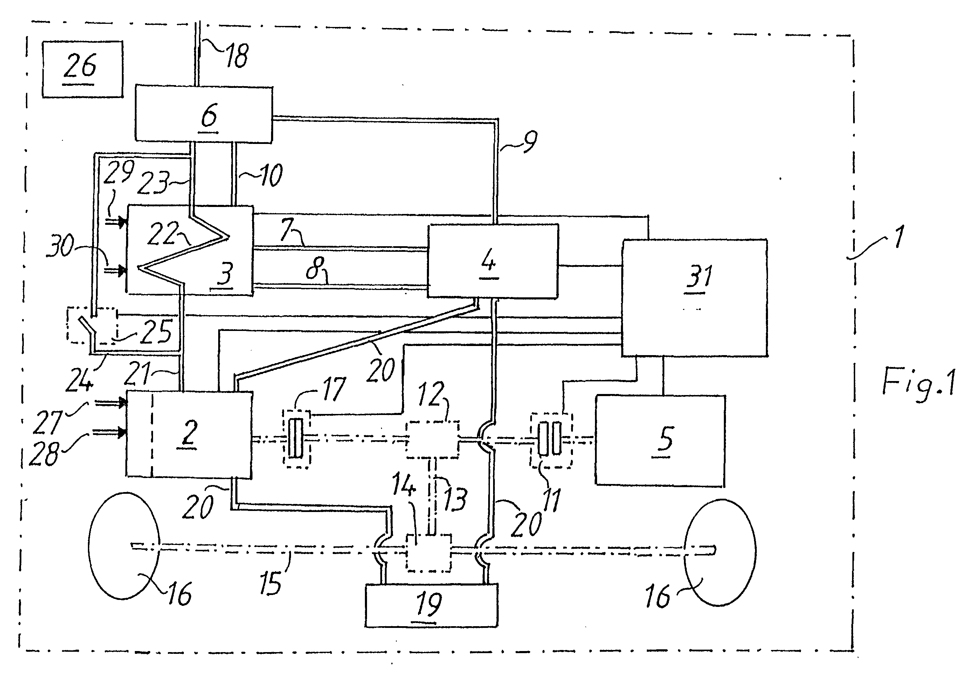

Durch Umdrehen eines nicht näher dargestellten Zündschlüssels in einem mit der Steuerung 31 verbundenen Zündschloß wird die Brennkraftmaschine 2 in üblicher Weise gestartet. Das Fahrzeug 1 ist nach dem Ingangsetzen der Brennkraftmaschine 2 fahrbereit. Durch Einlegen eine nicht dargestellten ersten Gangs und Betätigen der Kupplung 17 mittels der Steuerung 31 setzt sich das Fahrzeug 1 in Bewegung. Die Kupplung 11 ist dabei nicht betätigt. Das Absperrelement 25 sperrt die Bypass-Leitung 24. Die Brennkraftmaschine 2 treibt über das Differential 12, die Kardanwelle 13, das Differential 14 und die Achse 15 die Räder 16 an. Der vorstehend beschriebene Zustand des Fahrzeugs 1 ist in Fig. 1 dargestellt. Im Leerlauf der Brennkraftmaschine 2, insbesondere aber während der Fahrt bei entsprechender Leistungsabgabe, heizen die Abgase der Brennkraftmaschine 2 die Gaserzeugungseinrichtung 3 auf. Die Abgase der Brennkraftmaschine 2 gelangen nach dem Passieren der Heizschlange 22 über die Abgasleitung 23 in die Abgasreinigungseinheit 6 und von dort über den Auspuff 18 ins Freie. Die Brennkraftmaschine 2 wird durch die Zirkulation von Kühlflüssigkeit, die auch über die Brennstoffzelle 4 geleitet wird, im Kühler 19 auf einem für den Betrieb günstigen Wert gehalten. Die Brennstoffzelle 4 wird dabei ebenfalls auf z. B. 80°C bis 90°C erwärmt.

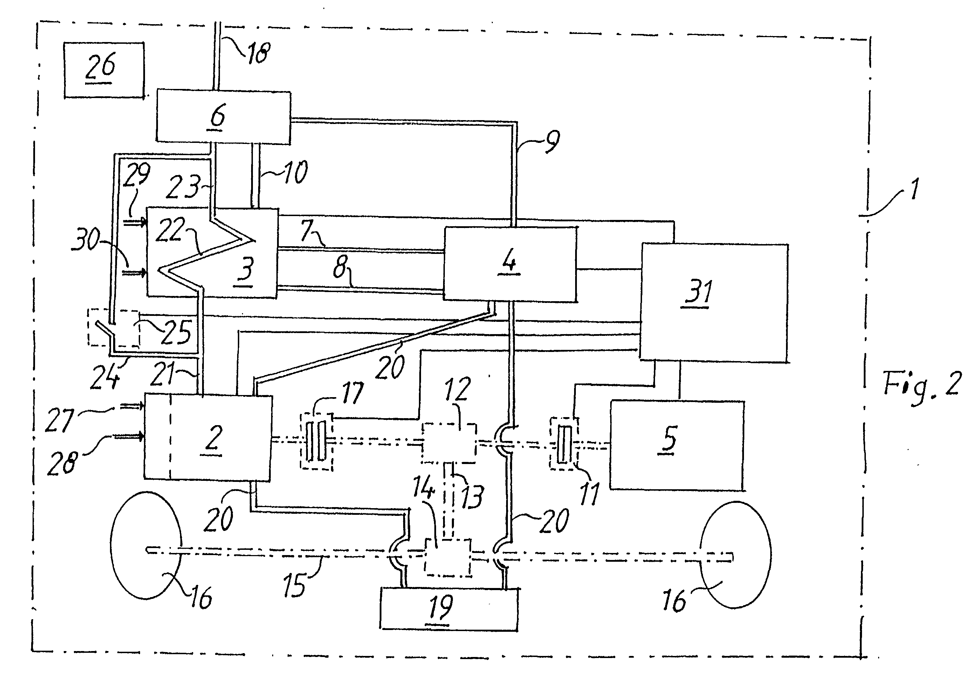

Die Steuerung 31 überwacht die Temperatur in der Gaserzeugungseinrichtung 3. Wenn die Gaserzeugungseinrichtung 3 ihre Betriebstemperatur erreicht hat, wird sie durch die Steuerung 31 automatisch in Betrieb genommen, indem Luft und Kraftstoff zugeführt werden. Für die Luft- und Kaftstoffzufuhr sind beispielsweise nicht dargestellte Kompressoren vorgesehen, die vom Akkumulator und der Lichtmaschine der Brennkraftmaschine 2 gespeist werden. Da die Gaserzeugungseinrichtung 3 und die Brennstoffzelle 4 zu diesem Zeitpunkt bereits ihre Betriebstemperaturen haben, wird innerhalb weniger Sekunden von der Brennstoffzelle 4 Strom erzeugt, wodurch die Aggregate der Brennstoffzellensystems und der Elektrofahrmotor 5 mit Strom versorgt werden. Die Steuerung 31 betätigt die Kupplung 11, öffnet die Kupplung 17 und schaltet die Brennkraftmaschine 2 aus. Das Fahrzeug 1 wird nunmehr von Elektrofahrmotor 5 angetrieben. Die Bypass-Leitung 24 ist hierbei weiterhin gesperrt. Die Gaserzeugungseinrichtung 3 erzeugt die für ihren Betrieb notwendige Wärme selbst. Der vorstehend beschriebene Betriebszustand ist in Fig. 2 dargestellt und an Hand der Stellungen der Kupplungen 11, 12 erkennbar.

Da die Brennkraftmaschine 2 durch die Abwärme der Brennstoffzelle 2 weiter beheizt wird, kann sie im Bedarfsfall zur Leistungssteigerung wieder eingeschaltet werden, wobei die Kupplung 17 wieder geschlossen wird.

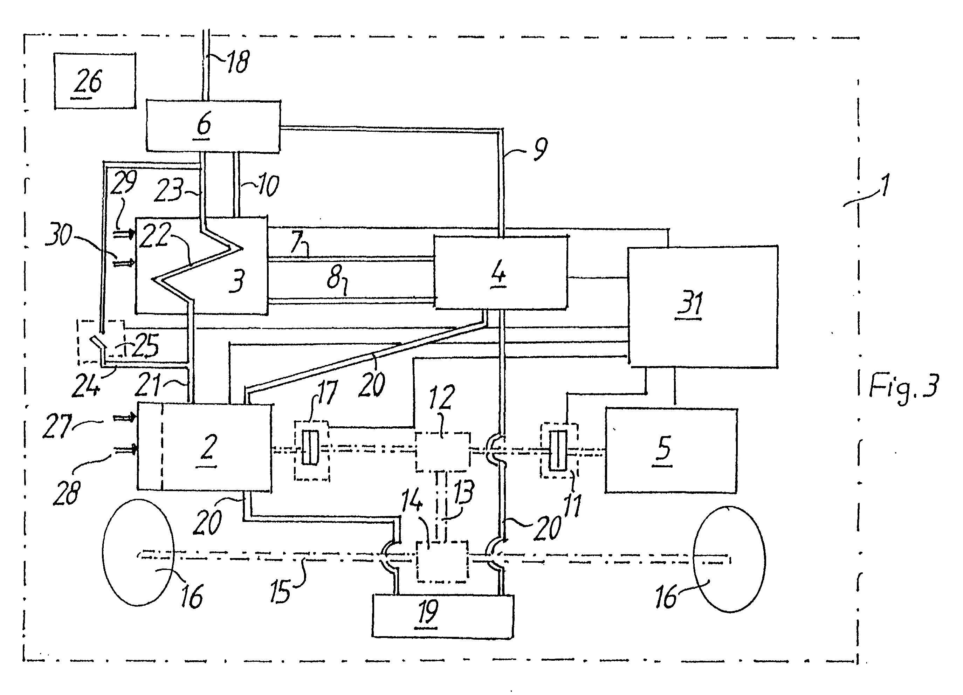

Das Fahrzeug 1 wird dann von der Brennkraftmaschine 2 und dem Elektrofahrmotor 5 angetrieben. In dieser Betriebsweise, die in Fig. 3 dargestellt ist, ist die Bypass-Leitung 24 durchlässig, wodurch eine unerwünscht hohe Erwärmung des Gaserzeugungseinrichtung 3 vermieden wird.

## Patentansprüche

1. Fahrzeug (1) mit wenigstens einem Antriebsstrang für Antriebsräder (16) und mit einem an den Antriebsstrang ankuppelbaren Brennkraftmaschinen-Antrieb (2) sowie mit einem Brennstoffzellensystem, das eine Brennstoffzelle (4) und eine Gaserzeugungseinrichtung (3) aufweist, die bei höheren Temperaturen aus einem Kraftstoff wasserstoffhaltiges Gas für die Brennstoffzelle (4) erzeugt, **dadurch gekennzeichnet, daß** Einrichtungen für die Überleitung von Wärme aus dem Brennkraftmaschinen-Antrieb in die Gaserzeugungseinrichtung (3) und in die Brennstoffzelle (4) und eine Steuerung (31) vorgesehen sind, von der automatisch Aggregate für die Zufuhr von Kraftstoff und Luft zum Brennstoffzellensystem nach dem Aufheizen der Gaserzeugungseinrichtung (3) und der Brennstoffzelle (4) auf Arbeitstemperatur einschaltbar sind.

2. Fahrzeug nach Anspruch 1, **dadurch gekennzeichnet, daß** wenigstens ein an den Antriebsstrang ankuppelbarer Elektrofahrmotor (5) vorgesehen ist.

3. Fahrzeug nach Anspruch 1 oder 2, **dadurch gekennzeichnet, daß** für die Energieversorgung des Brennkraftmaschinen-Antriebs und des Brennstoffzellensystems flüssiger Krafstoff vorgesehen ist.

4. Fahrzeug nach Anspruch 2, **dadurch gekennzeichnet, daß** nach der Funktionsaufnahme der Brennstoffzelle (4) der Elektrofahrmotor (5) an den Antriebsstrang automatisch ankuppelbar oder die manuell oder durch Fußpedal durchzuführende Kupplung des Elektrofahrmotors (5) mit dem Antriebsstrang freigebbar ist.

5. Fahrzeug nach Anspruch 2, 3 oder 4, **dadurch gekennzeichnet, daß** die Nennleistung des Brennkraftmaschinen-Antriebs (2) kleiner als die Nennleistung des Elektrofahrmotors (5) ist.

6. Fahrzeug nach zumindest einem der Ansprüche 2 bis 5, **dadurch gekennzeichnet, daß** der Brennkraftmaschinen-Antrieb (2) und der Brennstoffzellensystem-Antrieb in einem Kühlkreislauf gemeinsam an einen Kühler (19) angeschlossen sind.

7. Fahrzeug nach zumindest einem der vorangegangenen Ansprüche, **dadurch gekennzeichnet, daß** eine Einrichtung zur Überleitung von Wärme aus den Abgasen des Brennkraftmaschinen-Antriebs (2) in die Gaserzeugungseinrichtung (3) vorgesehen ist.

8. Fahrzeug nach Anspruch 7, **dadurch gekennzeichnet, daß** die Einrichtung zur Überleitung von Wärme eine im Innern der Gaserzeugung (3) verlaufende Leitung (22) für die Abgasrückführung ist.

9. Fahrzeug nach zumindest einem der vorhergehenden Ansprüche, **dadurch gekennzeichnet, daß** parallel zu der Einrichtung für die Überleitung von Wärme aus den Abgasen des Brennkraftmaschinen-Antriebs (1) in die Gaserzeugungseinrichtung (3) ein außerhalb der Gaserzeugungseinrichtung verlaufender Bypass (24) angeordnet ist, der ein von der Steuerung (31) betätigbares Sperrelement (25) aufweist.

10. Fahrzeug nach zumindest einem der vorhergehenden Ansprüche, **dadurch gekennzeichnet, daß** der Brennkraftmaschinen-Antrieb (2) und der Brennstoffzellensystem-Antrieb an einen gemeinsamen Abgasreiniger (6) angeschlossen sind.

11. Verfahren zum Betrieb eines Fahrzeugs mit wenigstens einem Antriebsstrang und mit einem an den Antriebsstrang ankuppelbaren Brennkraftmaschinen-Antrieb sowie mit einem Brennstoffzellensystem, das eine Brennstoffzelle und eine Gaserzeugungseinrichtung aufweist, die bei höheren Temperaturen aus einem flüssigen Kraftstoff wasserstoffhaltiges Gas für die Brennstoffzelle erzeugt,
**dadurch gekennzeichnet,**
**daß** der Brennkraftmaschinen-Antrieb mit flüssigem Kraftstoff betrieben wird und nach dem Starten der Brennkraftmaschine an den Antriebsstrang zur Fortbewegung des Fahrzeugs ankuppelbar ist, während die von der Brennkraftmaschine erzeugten heißen Abgase direkt und/oder indirekt das Brennstoffzellensystem auf eine wenigstens für die Funktion ausreichende Temperatur aufheizen, bei deren Erreichen das Brennstoffzellensystem durch Zufuhr von Kraftstoff und Luft in Gang gesetzt wird.

12. Verfahren nach Anspruch 11, **dadurch gekennzeichnet, daß** das Brennstoffzellensystem einen an den Antriebsstrang ankuppelbaren Elektrofahrmotor aufweist, der nach dem Erreichen der Betriebstemperatur des Brennstoffzellensystems automatisch an den Antriebsstrang angekuppelt wird oder daß eine Kupplung des Elektrofahrmotors zum Antriebsstrang für die Fuß- oder Handbetätigung freigegeben wird und der Brennkraftmaschinen-Antrieb wahlweise vom Antriebsstrang abgekoppelt wird.

13. Verfahren nach Anspruch 11, **dadurch gekennzeichnet, daß** der Brennkraftmaschinen-Antrieb und Brennstoffzellensystem-Antrieb gemeinsam auf den Antriebsstrang einwirken.

14. Verfahren nach Anspruch 11, **dadurch gekennzeichnet, daß** der Brennstoffzellensystem-Antrieb nach der Funktionsaufnahme der Brennstoffzelle alleine auf den Antriebsstrang einwirkt.

15. Verfahren nach zumindest einem der vorhergehenden Ansprüche, **dadurch gekennzeichnet, daß** die Brennstoffzelle und der Brennkraftmaschinen-Antrieb gemeinsam auf eine Betriebstemperatur gekühlt werden.

16. Verfahren nach zumindest einem der vorhergehenden Ansprüche, **dadurch gekennzeichnet, daß** ein zu einer Einrichtung in der Gaserzeugungseinrichtung für die Überleitung der Wärme paralleler Bypass außerhalb der Gaserzeugungseinrichtung beim Betrieb der Brennkraftmaschine und nicht in Betrieb befindlicher Brennstoffzelle sowie bei arbeitender Brennstoffzelle und nicht im Betrieb befindlicher Brennkraftmaschine gesperrt wird und bei zugleich arbeitender Brennkraftmaschine und Brennstoffzelle durchlässig gesteuert wird.

## Claims

1. A vehicle (1) with at least one drive train for driven road wheels (16), with an internal combustion engine drive unit (2) which can be connected to the drive train and with a fuel cell system having a fuel cell (4) and a gas generating device (3) which generates a hydrogenous gas from a fuel for the fuel cell (4) at high temperatures,
**characterised in that**
there are provided devices for transferring heat from the internal combustion engine drive unit to the gas generation device (3) and the fuel cell (4) and a control device (31) which can automatically switch on units for supplying fuel and air to the fuel cell system once the gas generation device (3) and the fuel cell (4) have been heated to operating temperature.

2. A vehicle in accordance with claim 1,
**characterised in that**
at least one electric drive motor (5) which can be connected to the drive train is provided.

3. A vehicle in accordance with claim 1 or 2,
**characterised in that**
liquid fuel is provided to supply energy to the internal combustion engine drive unit and the fuel cell system.

4. A vehicle in accordance with claim 2,
**characterised in that**
once the fuel cell (4) has started operation, the electric drive motor (5) can be connected automatically to the drive train or the manually or foot-pedal operated connection between the electric drive motor (5) and the drive train can be released.

5. A vehicle in accordance with claim 2, 3 or 4,
**characterised in that**
the rated power of the internal combustion engine drive unit (2) is smaller than the rated output of the electric drive motor (5).

6. A vehicle in accordance with at least one of claims 2 to 5,
**characterised in that**
the internal combustion engine drive unit (2) and the fuel cell system drive unit are both connected to a radiator (19) in a cooling circuit.

7. A vehicle in accordance with at least one of the preceding claims,
**characterised in that**
a device for transferring heat from the exhaust emissions of the internal combustion engine drive train (2) to the gas generation device (3) is provided.

8. A vehicle in accordance with claim 7,
**characterised in that**
the heat transferring device is a line (22) which runs inside the gas generating device (3) for the exhaust gas recirculation system.

9. A vehicle in accordance with at least one of the preceding claims,
**characterised in that**
a bypass (24) which runs outside the gas generation device (3) and has a closing element (25) which can be actuated by the control system (31) is positioned parallel to the device for transferring heat from the exhaust emissions of the internal combustion engine drive train (2) to the gas generation device (3).

10. A vehicle in accordance with at least one of the preceding claims,
**characterised in that**
the internal combustion engine drive train (2) and the fuel cell system drive train are connected to a common exhaust emission control system (6).

11. A process for the operation of a vehicle with at least one drive train, with an internal combustion engine drive unit which can be connected to the drive train and with a fuel cell system which has a fuel cell and a gas generation device which generates hydrogenous gas for the fuel cell from a liquid fuel at high temperatures,
**characterised in that**
the internal combustion engine drive train (2) is run on liquid fuel and once it has been started can be connected to the drive train in order to move the vehicle, while the hot exhaust emissions generated by the internal combustion engine directly and/or indirectly heat the fuel cell system to a temperature which is at least adequate for operation, upon achieving which the fuel cell system is set in operation by the supply of fuel and air.

12. A process in accordance with claim 11,
**characterised in that**
the fuel cell system has an electric drive motor which can be connected to the drive train and which is connected to the drive train automatically once the operating temperature of the fuel cell system is reached, or that a connection between the electric drive motor and the drive train is released for foot or manual operation and the internal combustion engine drive unit can be disconnected from the drive train.

13. A process in accordance with claim 11,
**characterised in that**
the internal combustion engine drive unit and the fuel cell system drive unit act jointly on the drive train.

14. A process in accordance with claim 11,
**characterised in that**
the fuel cell system drive unit only acts on the drive train once it has started operation.

15. A process in accordance with at least one of the preceding claims,
**characterised in that**
the fuel cell system and the internal combustion engine drive unit are jointly cooled to an operating temperature.

16. A process in accordance with at least one of the preceding claims,
**characterised in that**
a bypass outside the gas generation device parallel to a device in the gas generation device for the transfer of heat is closed when the internal combustion engine is in operation and the fuel cell is not in operation and is opened when the internal combustion engine and the fuel cell are operating simultaneously.

## Revendications

1. Véhicule (1) comportant au moins une chaîne motrice pour des roues motrices (16), et comportant un dispositif d'entraînement (2) à moteur à combustion interne, pouvant être couplé à la chaîne motrice, ainsi qu'un système de pile à combustible, qui comporte une pile à combustible (4) et un dispositif de production de gaz (3), qui produit à partir d'un carburant, à des températures assez élevées, un gaz contenant de l'hydrogène pour la pile à combustible (4), **caractérisé en ce que** des dispositifs sont prévus pour le transfert d'une chaleur depuis le dispositif d'entraînement (2) du moteur à combustion interne dans le dispositif (3) de production de gaz et dans la pile à combustible (4), et une unité de commande (31), qui peut brancher automatiquement des unités servant à amener du carburant et de l'air au système de pile à combustible après le chauffage du dispositif (3) de production de gaz et de la pile à combustible (4) à la température de travail.

2. Véhicule selon la revendication 1, **caractérisé en ce qu'**il est prévu au moins un moteur électrique de déplacement (5) pouvant être couplé à la chaîne motrice.

3. Véhicule selon la revendication 1 ou 2, **caractérisé en ce qu'**il est prévu un carburant liquide pour l'alimentation en énergie du dispositif d'entraînement à moteur à combustion interne et du système de pile à combustible.

4. Véhicule selon la revendication 2, **caractérisé en ce qu'**après la mise en oeuvre de la fonction de la pile à combustible (4), le moteur électrique de déplacement (5) peut être couplé automatiquement à la chaîne motrice ou l'accouplement, qui doit être exécuté manuellement au moyen d'une pédale, du moteur électrique de déplacement (5) à la chaîne motrice peut être supprimé.

5. Véhicule selon la revendication 2, 3 ou 4, **caractérisé en ce que** la puissance nominale du dispositif d'entraînement (2) à moteur à combustion interne est inférieure à la puissance nominale du moteur électrique de déplacement (5).

6. Véhicule selon au moins l'une des revendications 2 à 5, **caractérisé en ce que** le dispositif d'entraînement (2) à moteur à combustion interne et le dispositif d'entraînement à système de pile à combustible sont raccordés conjointement à un radiateur (19), dans un circuit de refroidissement.

7. Véhicule selon au moins l'une des revendications précédentes, **caractérisé en ce qu'**il est prévu un dispositif pour transférer de la chaleur depuis les gaz d'échappement du dispositif d'entraînement (2) à moteur à combustion interne au dispositif (3) de production de gaz.

8. Véhicule selon la revendication 7, **caractérisé en ce que** le dispositif de transfert de chaleur est une canalisation (22), qui s'étend à l'intérieur du dispositif (3) de production de gaz, pour le renvoi des gaz d'échappement.

9. Véhicule selon l'une des revendications précédentes, **caractérisé en ce qu'**en parallèle avec le dispositif de transfert de chaleur depuis les gaz d'échappement du dispositif d'entraînement (2) à moteur à combustion interne au dispositif (3) de production de gaz est disposé un by-pass (24) qui est situé à l'extérieur du dispositif de production de gaz et qui comporte un élément de blocage (25) pouvant être actionné par l'unité de commande (31).

10. Véhicule selon au moins l'une des revendications précédentes, **caractérisé en ce que** le dispositif d'entraînement (2) à moteur à combustion interne et le dispositif d'entraînement à système de pile à combustible sont raccordés à un dispositif commun (6) d'épuration des gaz d'échappement.

11. Procédé pour faire fonctionner un véhicule comportant au moins une chaîne motrice, et comportant un dispositif d'entraînement d'un moteur à combustion interne, pouvant être couplé à la chaîne motrice, ainsi qu'un système de pile à combustible, qui comporte une pile à combustible et un dispositif de production de gaz, qui produit à partir d'un carburant liquide, à des températures assez élevées, un gaz contenant de l'hydrogène pour la pile à combustible, **caractérisé en ce que** le dispositif d'entraînement à moteur à combustion interne fonctionne avec un carburant liquide et, après le démarrage du moteur à combustion interne, peut être accouplé à la chaîne motrice pour la poursuite du déplacement du véhicule, tandis que les gaz d'échappement chauds produits par le moteur à combustion interne chauffent directement et/ou indirectement le système de pile à combustible à une température suffisante au moins pour le fonctionnement, le système de pile à combustible étant mis en marche par envoi de carburant et d'air, lorsque cette température est atteinte.

12. Procédé selon la revendication 11, **caractérisé en ce que** le système de pile à combustible comporte un moteur électrique de déplacement, qui est accouplé automatiquement à la chaîne motrice et qui, lorsque la température de fonctionnement du système de pile à combustible est atteinte, est automatiquement accouplé à la chaîne motrice, ou qu'un accouplement du moteur électrique de déplacement à la chaîne motrice est supprimé pour l'actionnement à l'aide du pied ou de la main et que le dispositif d'entraînement à moteur à combustion interne est désaccouplé à volonté de la chaîne motrice.

13. Procédé selon la revendication 11, **caractérisé en ce que** le dispositif d'entraînement à moteur à combustion interne et le dispositif d'entraînement à système de pile à combustible agissent en commun sur la chaîne motrice.

14. Procédé selon la revendication 11, **caractérisé en ce que** le dispositif d'entraînement à système de pile à combustible agit uniquement sur la chaîne motrice, après arrêt du fonctionnement de la pile à combustible.

15. Procédé selon au moins l'une des revendications précédentes, **caractérisé en ce que** la pile à combustible et le dispositif d'entraînement à moteur à combustion interne sont refroidis en commun à une température de fonctionnement.

16. Procédé selon au moins l'une des revendications précédentes, **caractérisé en ce qu'**un by-pass parallèle à un dispositif situé dans le dispositif de production de gaz pour réaliser le transfert de chaleur, à l'extérieur du dispositif de production de gaz est bloqué lorsque le moteur à combustion interne fonctionne et que la pile à combustible n'est pas en fonctionnement, et lorsque la pile à combustiblc fonctionne et que le moteur à combustion interne n'est pas en fonctionnement, et est commandé de manière à être passant lorsque le moteur à combustion interne et la pile à combustible travaillent simultanément.
